# EUROPEAN PATENT SPECIFICATION

(11) **EP 3 771 840 B1**
(45) Date of publication and mention of the grant of the patent: **09.03.2022**
(21) Application number: 19382672.4
(22) Date of filing: 02.08.2019
(51) Int. Cl.: F16C 11/04, F16C 11/12

(54) **FLEXIBLE PIVOT FOR SPACE APPLICATIONS**
FLEXIBLER DREHPUNKT FÜR WELTRAUMANWENDUNGEN
PIVOT FLEXIBLE POUR APPLICATIONS SPATIALES

(43) Date of publication of application: 03.02.2021
(73) Proprietor: Sener Aeroespacial, S.A., 48930 Las Arenas (ES)
(72) Inventor: ARTIAGOITIA CARLOS, Aiala, 48930 Las Arenas (ES); COMPOSTIZO SAÑUDO, Carlos, 48930 Las Arenas (ES)
(74) Representative: Igartua, Ismael

(56) References cited:
- EP-A1- 3 165 470
- CN-A- 108 662 010
- US-A- 3 142 888
- US-A- 5 620 169
- US-A- 6 146 044
- US-A1- 2012 213 573
- US-A1- 2019 079 417
- US-A1- 2019 120 287

## Description

### TECHNICAL FIELD

The present invention relates to flexible pivots comprising a first ring, a second ring rotatable in respect of the first ring and a plurality of flexible legs associated to both rings, and being adapted for space applications.

### PRIOR ART

For certain space applications it is required to control the angular orientation of certain components on a satellite or a spacecraft. One example is controlling with high accuracy a mirror that has to perform a complete scan of the earth or a scan of any other celestial body, during a very large of number of cycles (millions).

In order to ensure their ability to withstand this repeated stress, pivot mountings for space applications have to be made extremely robust. Other common requirements for pivot mountings are a great mechanical strength (to withstand both external forces and bending moments exerted on the mounted shaft), high transverse stiffness, high-precision zero-tolerance guidance, an amplitude of rotation of several tenths of degrees in both directions, and, a low resistive torque.

Conventional bearings that use sliding or rolling elements (e.g. ball bearings) need effective lubrication and generate wear particles. The generation of wear particles is a problem for mechanisms in general and for optical applications in particular. Indeed, wear particles can jam the mechanism and also migrate to optical components, thus directly affecting the optical performance of instruments.

Flexible pivots are tribology free (no lubricated), and they are therefore most often the preferred choice in the context of long life, clean and precise applications in space. Furthermore, the mechanisms using of flexible pivots are very accurate due to the linearity between rotation angle and input torque that said flexible pivots offer. This makes that the mechanisms where the rotation axis is built with flexible pivots could be extremely accurate as they are completely free of frictions and free of non-predictable high frequency variable resistance torques. The linearity of a mechanism is lost when the centre of rotation changes during rotation, and this phenomenon is also known as center shift. The presence of a center shift degrades the accuracy of the mechanism and makes more difficult the implementation of the associated motor and angular sensor.

The more classical flexible pivots comprise two blades, and generate a quick high center shift, which could be acceptable in the order of 20 microns when the angles of rotation are as low as 10°. However, when the rotation increases, the center shift increases leading hundreds of microns, which prevent the use of accurate angular sensor in the close loop of the mechanism. For this reason, flexural pivots design should provide minimum center shift. When the angle of rotation is large, three blades are implemented at 120° arrangement to achieve a theoretical zero center shift pivot. The compatibility between the deflections of the three blades is achieved by cutting the blades at the center or providing a linear flexibility at the root of the blades. These solutions reduce the axial and shear stiffness of the pivots, which degrade its performances during its operation on ground or make its operation unfeasible on ground for heavy moving masses in certain gravity orientations. The lack of stiffness of the pivots could also drive to quite different behaviour between on ground and in orbit situations, which shall require the recalibration of the equipment in orbit.

EP2256039A1 discloses a flexible pivot comprising a first ring, a second ring and a plurality of flexible legs associated to the first ring and to the second ring and arranged angularly homogeneously. The first and second rings are arranged in series axially, and the second ring is rotatable in respect of the first ring. The design of the flexible pivot allows to increase the rotational range, by increasing its diameter and length of the legs, but the radial and axial stiffness is lowered as said length is increased.

EP3165470A1 discloses a flexible pivot also comprising a first ring, a second ring and a plurality of flexible legs associated to the first ring and to the second ring and arranged angularly homogeneously. The first and second rings are arranged in series axially, and the second ring is rotatable in respect of the first ring. The flexible legs of each ring are joined at the center of the ring. Each flexible leg is connected to the ring with a flexible spoke. This flexible spoke offers a radial flexibility to allow the compliance between the deformation of the flexible legs that reduces the shear and axial stiffness. Without that axial flexible spoke the rotation will not be possible or willy increase of the axial stresses in the flexible legs reducing its fatigue life. The center of the rings are joined by connecting members each comprising a pair of legs.

US 3 142 888 shows a flexible pivot according to the preamble of claim 1.

### DISCLOSURE OF THE INVENTION

The object of the invention is to provide a flexible pivot, as defined in the claims.

The flexible pivot comprises a first ring comprising a first central axis, a second ring comprising a second central axis and a plurality of flexible legs associated to both rings. Both rings are concentric, the first axis and the second axis being the same axis (a central axis of the flexible pivot). The flexible legs are arranged angularly homogeneously in respect of the central axis and the second ring is rotatable relative to the first ring rotating in respect of the central axis. Preferably the first ring remains static.

The diameter of one of said rings is larger than the diameter of the other ring, and the difference in the diameters is such that a gap between both rings is present, avoiding the contact between both rings, in order to prevent friction for being generated when the second ring rotates relative to the first ring. This fact allows a more precise movement of the second ring and, consequently, of the flexible pivot.

The flexible legs are arranged in series in the axial direction of the flexible pivot, such that they are arranged in different axial positions. One end of each flexible leg is attached to the first ring and the other end of each flexible leg is attached to the second ring, each flexible leg being so associated to both rings. The attachments are made, besides, in such a manner that with the second ring in a rest position (with no rotation of the flexible pivot), each flexible leg forms a straight line passing through the central axis. This fact allows all the flexible legs to comprise the same length if required, and, when the second ring rotates, all the flexible legs to behave in the same way maintaining the centre of rotation through the stroke of the flexible pivot. The ring comprising the shorter diameter comprises an opening for each flexible leg, for allowing said flexible leg to be associated to the other ring. In addition, said opening comprises a certain length for allowing the second ring to rotate without interfering with the flexible legs. The flexible pivot comprises a first V-shaped joining member for attaching one end of each flexible leg to the first ring and a second V-shaped joining member for attaching the other end of each flexible leg to the second ring. Each joining member comprises a vertex and two members extending from the vertex to the interior of the corresponding ring with a certain angle between them, said members being possible to flex in respect of the vertex, and, consequently, in respect of the corresponding flexible leg. Thanks to the V-shape joining members, the flexible legs can rotate around an intersection point of the elastic members of the vertex, without suffering tension or with a reduced tension comparing to the solutions of the prior art. The members of each joining member are, preferably, straight. The end of each flexible leg is connected to the vertex of the corresponding joining member, and said vertex is also connected to the corresponding ring in the intersection point.

The use of V-shaped joining members as described in both ends of each flexible leg, and their V-shape configuration, provides a compliant mechanism that allows the flexible legs to flexure when the second ring rotates, such that said flexible legs maintain their length irrespective of the rotation, and they are not overstressed in tension. As a result, when the second ring rotates the generation of center shift is avoided, and, furthermore, the original radial stiffness provided by the flexible legs is not altered either. Additionally, due to the flexible behaviour of the flexible legs provided by the joining members, the original shear and axial stiffness is not altered either.

When the second ring losses its rest position (when rotates), each flexure leg flexes as one end remains static (the end attached to the first ring) and the other end rotates (the end attached to the second ring). In said situation, the flexible legs can flex more freely than with the solutions of the prior art, as, for example, they are not forced to pass through the central axis, and the flexible pivot can rotate in a larger extend that known solutions (80°, for example, 40° in each direction). Said freedom also allows to maintain the length of the flexible legs, with at least the advantages mentioned beforehand.

Additionally, as the V-shaped joining members comprise two members extending in different directions from the flexure legs (from the vertex), the aforementioned advantages are achieved irrespective of the direction of rotation of the second ring.

These and other advantages and features of the invention will become apparent in view of the drawings and the detailed description of the invention.

### DESCRIPTION OF THE DRAWINGS

Figure 1 is a plant view of an embodiment of the flexible pivot according to the invention, in a rest position.
Figure 2 is a plant view of the flexible pivot of Figure 1, in a rotated position.
Figure 3 is a perspective view of the flexible pivot of Figure 1, in a rest position.
Figure 4 shows a V-shaped joining member of the flexible pivot of Figure 1.
Figure 5 is a perspective view of another embodiment of the flexible pivot according to the invention, in a rest position.

### DETAILED DISCLOSURE OF THE INVENTION

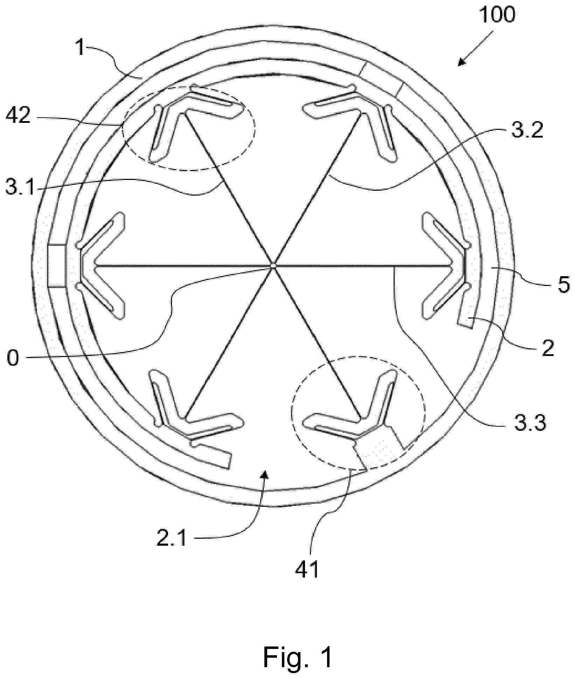

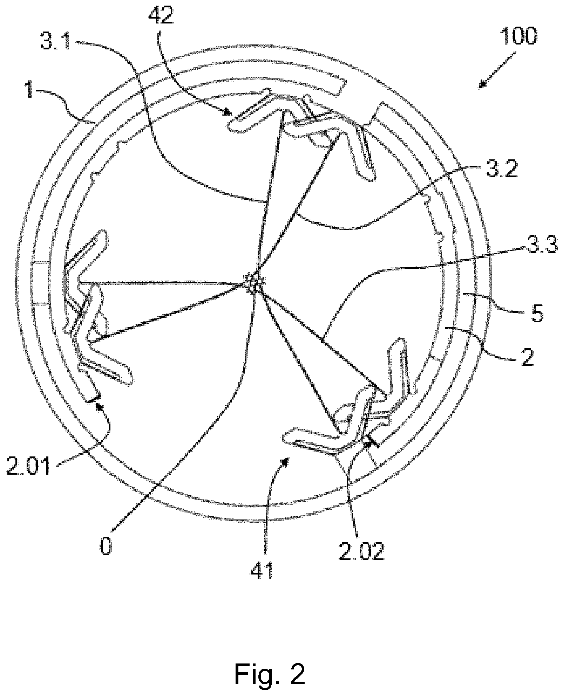

Figure 1 shows an embodiment of the flexible pivot 100 of the invention, in a rest position, while Figure 2 shows said flexible pivot 100 in a rotated position.

The flexible pivot 100 comprises a first ring 1 with a first axis, a second ring 2 with a second axis and at least one flexible set comprising a plurality of flexible legs 3.1, 3.2 y 3.3 associated to both rings 1 and 2, one end of each flexible leg 3.1, 3.2 y 3.3 being associated to the first ring 1 and the other end of each flexible leg 3.1, 3.2 y 3.3 being associated to the second ring 2. Both rings 1 and 2 are concentric, the first axis and the second axis being the same axis. Said axis is the same axis of the flexible pivot 100 (a central axis 0 of the flexible pivot 100). The second ring 2 is rotatable relative to the first ring 1 rotating in respect of the central axis 0 (Figure 2 shows the second ring 2 in a rotated position in respect of the first ring 1).

In some embodiments, the flexible pivot 100 can comprise two flexible sets, both sets being preferably equal and being disposed axially symmetrically, one above the other.

The flexible legs 3.1, 3.2 y 3.3 are arranged angularly homogeneously, in respect of the central axis 0, with the second ring 2 in a rest position. Preferably, the flexible pivot 100 comprises three flexible legs 3.1, 3.2 y 3.3 arranged at 120° from each other (as in the embodiment shown in Figure 1), but other number of flexible legs is also possible (with the corresponding angles between them).

The diameter of one of said rings 1 or 2 is larger than diameter of the other ring 1 or 2. Therefore, a gap 5 between both rings 1 and 2 is present, and said gap 5 allows avoiding friction between both rings 1 and 2, when the second ring 2 rotates in respect of the first ring 1. Preferably, the ring comprising a larger diameter (the outer ring) is the first ring 1, the ring with the shorter diameter (the inner ring) being the second ring 2. Hereafter, the description is based on the embodiments where the outer ring is the first ring 1, but this is not limitative, and the outer ring could be the second ring 2 instead.

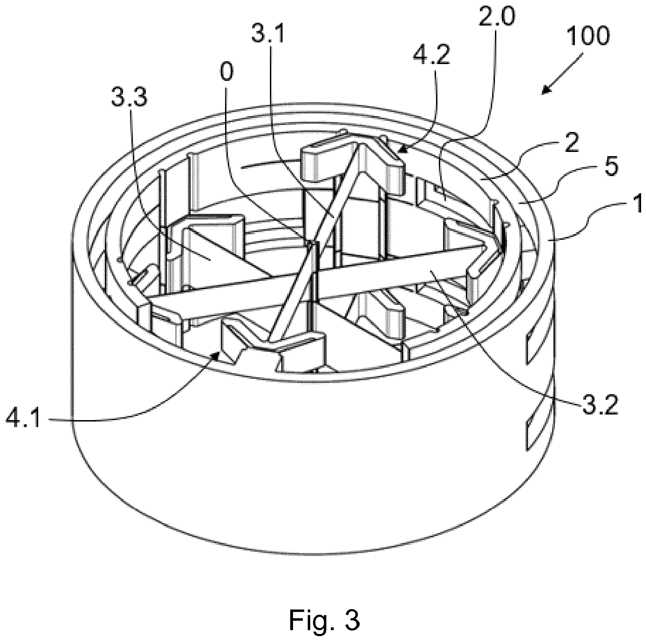

The flexible legs 3.1, 3.2 and 3.3 are arranged in series in the axial direction of the flexible pivot 100, with no contact between them, such that they are arranged in different axial positions as shown in Figure 3. The distance between each other must be such that a contact between two adjacent flexible legs 3.1, 3.2 and 3.3 is avoided. This arrangement allows the flexible legs 3.1, 3.2 and 3.3 to flex individually. One end of each flexible leg 3.1, 3.2 and 3.3 is associated to the first ring 1 and the other end of each flexible leg 3.1, 3.2 and 3.3 is associated to the second ring 2, such that with the second ring 2 in a rest position (with the flexible pivot 100 in a rest position), each flexible leg 3.1, 3.2 and 3.3 forms a straight line passing through the central axis 0, as can be seen in Figure 1. Preferably, the length of all the flexible legs 3.1, 3.2 and 3.3 is the same, the behaviour of all the flexible leg 3.1, 3.2 and 3.3 being the same. Preferably, the length of the flexible legs 3.1, 3.2 and 3.3 is equal or shorter than the diameter of the inner ring.

The inner ring comprises at least one opening 2.0 associated to each flexible leg 3.1, 3.2 and 3.3, for allowing said flexible leg 3.1, 3.2 and 3.3 to connect the outer ring. Thanks to said openings 2.0 the second ring 2 can rotate without interfering the flexible legs 3.1, 3.2 and 3.3. The length of the openings 2.0 is such that, at least, it allows the rotation of the flexible pivot 100 the required degree. Preferably, the length of all the openings 2.0 is the same, although they could comprise different lengths also maintaining a minimum length that allows the flexible pivot 100 to rotate the required degree.

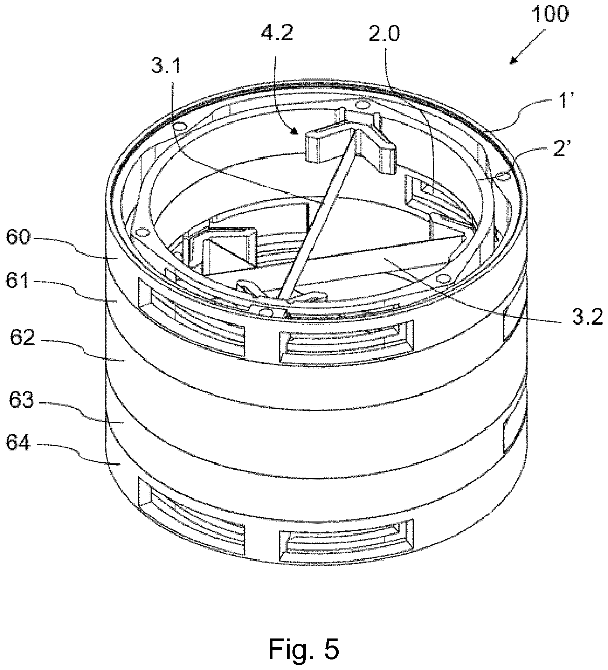

In some embodiments, as the embodiments shown in Figures 1 to 4, the inner ring is an open ring comprising two facing ends 2.01 and 2.02, the separation between said ends 2.01 and 2.02 meeting, at least, the function of an opening 2.0 for allowing a flexure leg 3.1, 3.2 or 3.3 to be associated to the outer ring. The other two openings 2.0 of the inner ring comprise a groove-shape. In other embodiments, as the one shown in Figure 5, the inner ring is closed and comprises an opening 2.0 for each flexible leg 3.1, 3.2 and 3.3, said openings 2.0 comprising a groove-shape. The length of the openings 2.0 is such that it allows the rotation of the flexible pivot 100 the required degree.

The flexible pivot 100 comprises a first V-shaped joining member 41 for associating one end of each flexible leg 3.1, 3.2 and 3.3 to the first ring 1 and a second V-shaped joining member 42 for associating the other end of each flexible leg 3.1, 3.2 and 3.3 to the second ring 2. Preferably, both V-shaped joining members 41 and 42 are equal for achieving uniform distribution of the stresses in the corresponding flexible leg 3.1, 3.2 and 3.3. The flexure legs 3.1, 3.2 and 3.3 are connected to the corresponding V-shaped joining members 41 and 42, the first V-shaped joining members 41 are connected to the first ring 1 and the second V-shaped joining members 42 are connected to the second ring 2, each flexure leg 3.1, 3.2 and 3.3 being thus connected or attached to both rings 1 and 2. Preferably, the length of the flexible legs 3.1, 3.2 and 3.3 does not extend out of the inner area delimited by the inner ring as described before, the corresponding joining member41 or 42 passing through the corresponding opening 2.0 for connecting the flexible leg 3.1, 3.2 and 3.2 to the outer ring.

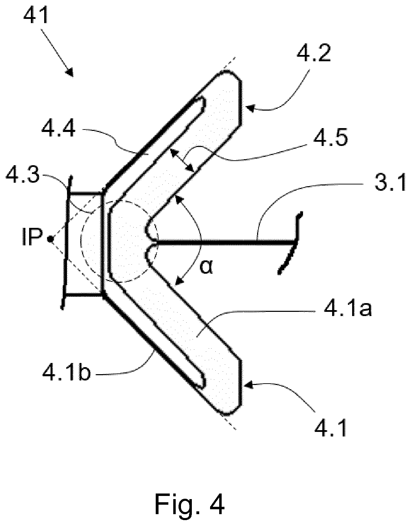

Each V-shaped joining member 41 and 42 comprises a vertex 4.3 and two members 4.1 and 4.2 extending from the vertex 4.3 towards the interior of the corresponding ring 1 and 2, a certain angle α being defined between both members 4.1 and 4.2, as it is shown with more detail in Figure 4.

The end of each flexible leg 3.1, 3.2 and 3.3 is connected to the vertex 4.3 of the corresponding joining member 41 and 42, and said vertex 4.3 is also connected to the corresponding ring 1 and 2 in an intersection point IP. Each joining member 41 and 42 comprises, at least, a respective groove extending along at least part of the members 4.1 and 4.2. Said grooves are preferably straight grooves.

Preferably, each joining member 41 and 42 comprises a continuous groove 4.4 extending along the member 4.1, the vertex 4.3 and the other member 4.2 and following the shape of said members 4.1 and 4.2 and said vertex 4.3, as shown in Figure 4 with more detail. Said continuous groove 4.4 divides each joining member 41 and 42 in two parts, a first part 4.1a towards the central axis 0 of the flexible pivot 100 and a second part 4.1b in the opposite direction (towards the corresponding ring 1 or 2). The width 4.5 of the first part 4.1a is greater than the width of the second part 4.1b (preferably at least 10 times greater), such that when the second ring 2 rotates, the second part 4.1b rotates following said rotation and the first part 4.1a is deformed. Said difference in the width provides a flexure property to the members 4.1 and 4.2 of the joining member 41 and 42 (to the two parts 4.1a and 4.1b), such that when the second ring 2 rotates in respect of the first ring 1, the corresponding member 4.1 and 4.2 (depends of the direction of rotation) flexes at the same time as the corresponding flexure leg 3.1, 3.2 and 3.3 maintains its length. The flexion of the parts 4.1a and 4.2b lead to a rotation of the flexure legs 3.1, 3.2 and 3.3 around the corresponding intersection points IP. This rotation allows a distribution of the bending stresses in the flexure legs 3.1, 3.2 and 3.3 without generation of tension stresses. This fact allows to maintain the rigidity of the joining members 41 and 42, and therefore of the flexible leg 3.1, 3.2 and 3.3, in the radial direction. Therefore, a flexible pivot 100 that is flexible to the rotation but rigid to the axial and shear loads is achieved.

The certain angle α defined between both members 4.1 and 4.2 delimitates the angular flexibility of the flexible pivot 100, the certain angle α being symmetrical with respect to the corresponding flexible leg 3.1, 3.2 or 3.3 in the rest position. Thanks to the design of the flexible pivot 100, the certain angle α is lower than 180° a more than 0° in any case. The smaller the certain angle α is the bigger the tension suffered by the corresponding leg 3.1, 3.2 or 3.3 is and the bigger the certain angle α is the smaller the rigidity offered by the corresponding leg 3.1, 3.2 or 3.3 is, therefore, preferably, the value of the certain angle α is separated from said limit values (0° and 180°) and can be within a range delimited between 40° and 140°, but the preferred value for said certain angle α is about 90°. Said design contributes to provide an angular flexibility of at least ±40° to the flexible pivot 100 (40° in each direction). This is a great advantage compared to the solutions known from the state of the art, where such angular flexibility is lower. With a certain angle α of about 90°, the angle between each member 4.1 and 4.2 and the corresponding flexible leg 3.1, 3.2 or 3.3 in the rest position is of about 45°, which allows, then, a rotation of nearly 45° in each direction of rotation, a rotation degree of ±40° for the flexible pivot 100 being then assured without increasing axial stresses in the flexible legs 3.1, 3.2 and 3.3.

The members 4.1 and 4.2 of each joining member 41 and 42 comprise the same length and extend symmetrically from the vertex 4.3 of the corresponding joining member 4.3, such they confer the same flexible properties in both rotation directions and also facilitates its manufacture.

In some embodiments, as the one shown in Figure 5, the flexible pivot 100 comprises a plurality of bodies 60 to 64 attached to each other in the axial direction of the flexible pivot 100, each body 60 to 64 comprising a first ring 1', a second ring 2' and a flexible leg attached to both rings 1' and 2' by means of the corresponding joining members 41 and 42 as described before. The first ring 1' of all bodies 60 to 64 comprises the same diameter and the second rings 2' of all bodies 60 to 64 comprises the same diameter, all the rings 1' and 2' being concentric and comprising the same axis (the central axis 0 of the flexible pivot 100).

In said embodiments, the first rings 1' of the different bodies 60, 61, 62, 63 and 64 form the first ring 1 of the flexible pivot 100, and the second rings 2' of the different bodies 60, 61, 62, 63 and 64 forms the second ring 2 of the flexible pivot 100. The rings 1' are separated axially in order to avoid a contact between them, and, in the same way, the rings 2' are also separated axially in order to avoid a contact between them. Each of the second rings 2' are rotatable in respect of the first ring 1' of the same body 60, 61, 62, 63 and 64, and, additionally, all second rings 2' are configured for rotating together. Each ring 1' or 2' with the shorter diameter of each body 60, 61, 62, 63 and 64 comprises an opening 2.0 for the corresponding flexible leg, for allowing said flexible leg to be associated to the other ring 1' or 2' of the said body 60, 61, 62, 63 and 64.

The example of Figure 5 shows a flexible pivot 100 comprising five flexible legs and five bodies 60 to 64.

## Claims

1. Flexible pivot for space applications, comprising a first ring (1) with a first axis, a second ring (2) with a second axis, and at least one flexible set comprising a plurality of flexible legs (3.1, 3.2, 3.3) associated to both rings (1, 2), the first axis and the second axis being the same axis and said axis being a central axis (0) of the flexible pivot (100), the flexible legs (3.1, 3.2, 3.3) being arranged angularly homogeneously in respect of the central axis (0) and the second ring (2) being rotatable in respect of the central axis (0) and of the first ring (1), wherein both rings (1, 2) are concentric, the diameter of one of said rings (1, 2) being larger than diameter of the other ring (1, 2) such that a gap (5) between both rings (1, 2) is present for avoiding friction between both rings (1, 2) when the second ring (2) rotates in respect of the first ring (1), the flexible legs (3.1, 3.2, 3.3) being arranged in series in the axial direction of the flexible pivot (100), such that they are arranged in different axial positions, one end of each flexible leg (3.1, 3.2, 3.3) being attached to the first ring (1) and the other end of each flexible leg (3.1, 3.2, 3.3) being attached to the second ring (2), such that with the second ring (2) in a rest position, each flexible leg (3.1, 3.2, 3.3) forms a straight line passing through the central axis (0), **characterized in that** the ring (1, 2) comprising the shorter diameter comprises an opening (2.0) for each flexible leg (3.1, 3.2, 3.3), for allowing the corresponding flexible leg (3.1, 3.2, 3.3) to be associated to the other ring (1, 2), the flexible pivot (100) comprising a first V-shaped joining member (41) for associating one end of each flexible leg (3.1, 3.2, 3.3) to the first ring (1) and a second V-shaped joining member (42) for associating the other end of each flexible leg (3.1, 3.2, 3.3) to the second ring (2), each joining member (41, 42) comprising a vertex (4.3) and two members (4.1, 4.2), the end of each flexible leg (3.1, 3.2, 3.3) being connected to the vertex (4.3) of the corresponding joining member (41, 42), and said vertex (4.3) being also connected to the corresponding ring (1, 2) in an intersection point (IP), the two members (4.1, 4.2) of each joining member (41, 42) extending from the intersection point (IP) of the corresponding vertex (4.3) towards the interior of the corresponding ring (1, 2).

2. Flexible pivot according to claim 1, wherein each joining member (41, 42) comprises a continuous groove (4.4) extending along the members (4.1, 4.2) and the vertex (4.3) and following the shape of said members (4.1, 4.2) and said vertex (4.3).

3. Flexible pivot according to claim 2, wherein the continuous groove (4.4) divides the corresponding member (4.1, 4.2) in a first part (4.1a) from said groove (4.4) towards the central axis (0) of the corresponding ring (1, 2) and a second part (4.1b) from said groove (4.4) towards the corresponding ring (1, 2), the thickness (4.5) of the first part (4.1a) being greater than the thickness of the second part (4.1b).

4. Flexible pivot according to claim 3, wherein the thickness (4.5) of the first part (4.1a) of each member (4.1, 4.2) of each joining member (41, 42) is at least ten times greater than the thickness of the corresponding second part (4.1b).

5. Flexible pivot according to any of claims 1 to 4, wherein the members (4.1, 4.2) of each joining member (41, 42) comprise the same length and extend symmetrically from the vertex (4.3) of the corresponding joining member (41, 42), in respect of the corresponding flexure leg (3.1, 3.2, 3.3).

6. Flexible pivot according to any of claims 1 to 5, wherein an angle (α) defined between the members (4.1, 4.2) of each joining member (41, 42) is greater than 0° an lower than 180°, preferably within a range delimited between 40° and 140°.

7. Flexible pivot according to claim 6, wherein the angle (α) between the members (4.1, 4.2) of each joining member (41, 42) is of about 90°.

8. Flexible pivot according to any of claims 1 to 7, wherein the length of all the flexure legs (3.1, 3.2, 3.3) is the same.10. Flexible pivot according to any of claims 1 to 9, wherein the ring (2) comprising a larger diameter is the first ring (1).

9. Flexible pivot according to any of claims 1 to 8, comprising at least three flexible legs (3.1, 3.2, 3.3).

10. Flexible pivot according to any of claims 1 to 9, wherein the ring (1, 2) with the shorter diameter is an open ring comprising two facing ends (2.01, 2.02), the separation between said ends (2.01, 2.02) being an opening (2.0) for allowing a flexure leg (3.1, 3.2, 3.3) to be associated to the other ring (1, 2).

11. Flexible pivot according to any of claims 1 to 10, comprising two flexible sets, both sets being equal and being disposed axially symmetrically, one above the other.

12. Flexible pivot according to any of claims 1 to 11, comprising a plurality of bodies (60, 61, 62, 63, 64) attached to each other in the axial direction of the flexible pivot (100), each body (60, 61, 62, 63, 64) comprising a first ring (1'), a second ring (2') and a flexible leg attached to both rings (1, 2) by means of the corresponding V-shaped joining members (41, 42), the first ring (1') of all bodies (60, 61, 62, 63, 64) being concentric and comprising the same diameter and the second rings (2') of all bodies (60, 61, 62, 63, 64) being concentric and comprising the same diameter, the first rings (1') of the different bodies (60, 61, 62, 63, 64) forming the first ring (1) of the flexible pivot (100) and the second rings (2') of the different bodies (60, 61, 62, 63, 64) being rotatable in respect of the corresponding first rings (1') and forming the second ring (2) of the flexible pivot (100).

13. Flexible pivot according to claim 12, wherein each ring (1', 2') with the shorter diameter of each body (60, 61, 62, 63, 64) comprises an opening (2.0) for the corresponding flexible leg, for allowing said flexible leg to be associated to the other ring (1', 2') of said body (60, 61, 62, 63, 64).

## Patentansprüche

1. Flexibler Drehpunkt für Weltraumanwendungen, umfassend einen ersten Ring (1) mit einer ersten Achse, einen zweiten Ring (2) mit einer zweiten Achse und mindestens eine flexible Gruppe mit einer Vielzahl von flexiblen Stegen (3.1, 3.2, 3.3), die mit den beiden Ringen (1, 2) verbunden sind, wobei die erste und die zweite Achse ein und dieselbe Achse sind und die genannte Achse eine Mittelachse (0) des flexiblen Drehpunkts (100) ist, die flexiblen Stege (3.1, 3.2, 3. 3) relativ zur Mittelachse (0) winkelgleich angeordnet sind und der zweite Ring (2) relativ zur Mittelachse (0) und zum ersten Ring (1) drehbar ist, wobei beide Ringe (1, 2) konzentrisch sind und der Durchmesser eines der genannten Ringe (1, 2) größer als der Durchmesser des anderen Rings (1, 2) ist, sodass zwischen beiden Ringen (1, 2) ein Freiraum (5) besteht, um bei der Drehung des zweiten Rings (2) relativ zum ersten Ring (1) Reibung zwischen den beiden Ringen (1, 2) zu vermeiden, wobei die flexiblen Stege (3. 1, 3.2, 3.3) in Achsrichtung des flexiblen Drehpunkts (100) in Reihe und zwar in unterschiedlichen axialen Positionen angeordnet sind, wobei ein Ende jedes flexiblen Stegs (3.1, 3.2, 3.3) am ersten Ring (1) und das andere Ende jedes flexiblen Stegs (3.1, 3.2, 3. 3) am zweiten Ring (2) befestigt ist, sodass jeder flexible Steg (3.1, 3.2, 3.3) in der Ruhestellung des zweiten Rings (2) eine durch die Mittelachse (0) verlaufende Gerade bildet, **dadurch gekennzeichnet, dass** der Ring (1, 2) mit dem kleineren Durchmesser eine Öffnung (2. 0) für die einzelnen flexiblen Stege (3.1, 3.2, 3.3) zwecks Verbindung des jeweiligen flexiblen Stegs (3.1, 3.2, 3.3) mit dem anderen Ring (1, 2) aufweist, wobei der flexible Drehpunkt (100) ein erstes V-förmiges Verbindungselement (41) zur Verbindung eines Endes der einzelnen flexiblen Stege (3.1, 3.2, 3.3) mit dem ersten Ring (1) und ein zweites V-förmiges Verbindungselement (42) zum Verbinden des anderen Endes der einzelnen flexiblen Stege (3.1, 3.2, 3.3) mit dem zweiten Ring (2) aufweist, wobei jedes Verbindungselement (41, 42) einen Scheitel (4.3) und zwei Arme (4.1, 4.2) aufweist und das Ende der einzelnen flexiblen Stege (3.1, 3.2, 3.3) mit dem Scheitel (4.3) des entsprechenden Verbindungselements (41, 42) verbunden ist und der genannte Scheitel (4.3) in einem Schnittpunkt (IP) auch mit dem entsprechenden Ring (1, 2) verbunden ist, wobei sich die beiden Arme (4.1, 4.2) der einzelnen Verbindungselemente (41, 42) vom Schnittpunkt (IP) des entsprechenden Scheitels (4.3) aus zum Inneren des entsprechenden Rings (1, 2) hin erstrecken.

2. Flexibler Drehpunkt nach Anspruch 1, wobei jedes Verbindungselement (41, 42) eine durchgehende Vertiefung (4.4) aufweist, die sich entlang der Arme (4.1, 4.2) und des Scheitels (4.3) erstreckt und der Form der genannten Arme (4.1, 4.2) und des genannten Scheitels (4.3) entspricht.

3. Flexibler Drehpunkt nach Anspruch 2, wobei die durchgehende Vertiefung (4.4) den jeweiligen Arm (4.1, 4.2) in einen ersten Teil (4.1a) von der genannten Vertiefung (4.4) hin zur Mittelachse (0) des jeweiligen Rings (1, 2) und einen zweiten Teil (4.1 b) von der genannten Vertiefung (4.4) hin zum jeweiligen Ring (1, 2) unterteilt, wobei die Dicke (4.5) des ersten Teils (4.1a) stärker als die Dicke des zweiten Teils (4.1b) ist.

4. Flexibler Drehpunkt nach Anspruch 3, wobei die Dicke (4.5) des ersten Teils (4.1a) eines jeden Arms (4.1, 4.2) der einzelnen Verbindungselemente (41, 42) mindestens zehnmal so stark wie die Dicke des entsprechenden zweiten Teils (4.1b) ist.

5. Flexibler Drehpunkt nach einem der Ansprüche 1 bis 4, wobei die Arme (4.1, 4.2) der einzelnen Verbindungselemente (41, 42) gleich lang sind und relativ zum entsprechenden Biegesteg (3.1, 3.2, 3.3) symmetrisch vom Scheitelpunkt (4.3) des entsprechenden Verbindungselements (41, 42) aus verlaufen.

6. Flexibler Drehpunkt nach einem der Ansprüche 1 bis 5, wobei ein zwischen den Armen (4.1, 4.2) der einzelnen Verbindungselemente (41, 42) definierter Winkel (α) größer als 0° und kleiner als 180° ist und vorzugsweise in einem Bereich zwischen 40° und 140° liegt.

7. Flexibler Drehpunkt nach Anspruch 6, wobei der Winkel (α) zwischen den Armen (4.1, 4.2) der einzelnen Verbindungselemente (41, 42) etwa 90° beträgt.

8. Flexibler Drehpunkt nach einem der Ansprüche 1 bis 7, wobei die Länge aller Biegestege (3.1, 3.2, 3.3) gleich ist. 10. Flexibler Drehpunkt nach einem der Ansprüche 1 bis 9, wobei der Ring (2) mit dem größeren Durchmesser der erste Ring (1) ist.

9. Flexibler Drehpunkt nach einem der Ansprüche 1 bis 8, der mindestens drei flexible Stege (3.1, 3.2, 3.3) aufweist.

10. Flexibler Drehpunkt nach einem der Ansprüche 1 bis 9, wobei der Ring (1, 2) mit dem kleineren Durchmesser ein offener Ring mit zwei einander gegenüberliegenden Enden (2.01, 2.02) ist, wobei der Abstand zwischen den genannten Enden (2.01, 2.02) eine Öffnung (2.0) ist, die die Verbindung eines Biegestegs (3.1, 3.2, 3.3) mit dem anderen Ring (1, 2) ermöglicht.

11. Flexibler Drehpunkt nach einem der Ansprüche 1 bis 10, der zwei elastische Gruppen umfasst, wobei beide Gruppen gleich sind und achssymmetrisch übereinander angeordnet sind.

12. Flexibler Drehpunkt nach einem der Ansprüche 1 bis 11, umfassend eine Vielzahl von in Achsrichtung des flexiblen Drehpunkts (100) aneinander befestigten Körpern (60, 61, 62, 63, 64), wobei jeder Körper (60, 61, 62, 63, 64) einen ersten Ring (1'), einen zweiten Ring (2') und einen mittels der entsprechenden V-förmigen Verbindungselemente (41, 42) an den beiden Ringen (1, 2) befestigten flexiblen Stege umfasst, wobei die ersten Ringe (1') aller Körper (60, 61, 62, 63, 64) konzentrisch und gleichen Durchmessers sind und die zweiten Ringe (2') aller Körper (60, 61, 62, 63, 64) konzentrisch und gleichen Durchmessers sind, wobei die ersten Ringe (1') der verschiedenen Körper (60, 61, 62, 63, 64) den ersten Ring (1) des flexiblen Drehpunkts (100) bilden und die zweiten Ringe (2') der verschiedenen Körper (60, 61, 62, 63, 64) relativ zu den entsprechenden ersten Ringen (1') drehbar sind und den zweiten Ring (2) des flexiblen Drehpunkts (100) bilden.

13. Flexibler Drehpunkt nach Anspruch 12, wobei die Ringe (1', 2') mit dem kleineren Durchmesser der einzelnen Körper (60, 61, 62, 63, 64) eine Öffnung (2.0) für den entsprechenden flexiblen Steg zwecks Verbindung des genannten flexiblen Stegs mit dem anderen Ring (1', 2') des genannten Körpers (60, 61, 62, 63, 64) aufweisen.

## Revendications

1. Pivot flexible pour applications spatiales, comprenant un premier anneau (1) avec un premier axe, un second anneau (2) avec un second axe, et au moins un ensemble flexible comprenant une pluralité de jambes flexibles (3.1, 3.2, 3.3) associées aux deux anneaux (1, 2), le premier axe et le second axe étant le même axe et ledit axe étant un axe central (0) du pivot flexible (100), les jambes flexibles (3.1, 3.2, 3. 3) étant disposées angulairement de manière homogène par rapport à l'axe central (0) et le deuxième anneau (2) étant rotatif par rapport à l'axe central (0) et au premier anneau (1), dans lequel les deux anneaux (1, 2) sont concentriques, le diamètre de l'un desdits anneaux (1, 2) étant plus grand que le diamètre de l'autre anneau (1, 2) de sorte qu'un espace (5) entre les deux anneaux (1, 2) est présent pour éviter le frottement entre les deux anneaux (1, 2) lorsque le deuxième anneau (2) tourne par rapport au premier anneau (1), les jambes flexibles (3.1, 3.2, 3.3) étant disposées en série dans la direction axiale du pivot flexible (100), de sorte qu'elles sont disposées dans différentes positions axiales, une extrémité de chaque jambe flexible (3.1, 3.2, 3.3) étant fixée au premier anneau (1) et l'autre extrémité de chaque jambe flexible (3.1, 3.2, 3.3) étant fixée au deuxième anneau (2), de sorte que, avec le deuxième anneau (2) dans une position de repos, chaque jambe flexible (3.1, 3.2, 3.3) forme une ligne droite passant par l'axe central (0), **caractérisé en ce que** l'anneau (1, 2) comprenant le plus petit diamètre comprend une ouverture (2.0) pour chaque branche flexible (3.1, 3.2, 3.3), pour permettre à la branche flexible correspondante (3.1, 3.2, 3.3) d'être associée à l'autre anneau (1, 2), le pivot flexible (100) comprenant un premier élément de jonction en forme de V (41) pour associer une extrémité de chaque branche flexible (3.1, 3.2, 3.3) au premier anneau (1) et un second organe de liaison en V (42) pour associer l'autre extrémité de chaque jambe flexible (3.1, 3.2, 3.3) au second anneau (2), chaque organe de liaison (41, 42) comprenant un sommet (4.3) et deux éléments (4.1, 4.2), l'extrémité de chaque jambe flexible (3.1, 3.2, 3.3) étant reliée au sommet (4. 3) de l'organe de liaison correspondant (41, 42), et ledit sommet (4.3) étant également relié à l'anneau correspondant (1, 2) en un point d'intersection (IP), les deux organes (4.1, 4.2) de chaque organe de liaison (41, 42) s'étendant du point d'intersection (IP) du sommet correspondant (4.3) vers l'intérieur de l'anneau correspondant (1, 2).

2. Pivot flexible selon la revendication 1, dans lequel chaque élément de jonction (41, 42) comprend une rainure continue (4.4) s'étendant le long des éléments (4.1, 4.2) et du sommet (4.3) et suivant la forme desdits éléments (4.1, 4.2) et dudit sommet (4.3).

3. Pivot flexible selon la revendication 2, dans lequel la rainure continue (4.4) divise l'élément correspondant (4.1, 4.2) en une première partie (4.1a) depuis ladite rainure (4.4) vers l'axe central (0) de l'anneau correspondant (1, 2) et une seconde partie (4.1b) depuis ladite rainure (4.4) vers l'anneau correspondant (1,2), l'épaisseur (4.5) de la première partie (4.1a) étant supérieure à l'épaisseur de la seconde partie (4.1b).

4. Pivot flexible selon la revendication 3, dans lequel l'épaisseur (4.5) de la première partie (4.1a) de chaque élément (4.1, 4.2) de chaque élément de jonction (41, 42) est au moins dix fois supérieure à l'épaisseur de la deuxième partie (4.1b) correspondante.

5. Pivot flexible selon l'une quelconque des revendications 1 à 4, dans lequel les éléments (4.1, 4.2) de chaque organe de liaison (41, 42) comprennent la même longueur et s'étendent symétriquement à partir du sommet (4.3) de l'organe de liaison (41, 42) correspondant, par rapport à la branche de flexion (3.1, 3.2, 3.3) correspondante.

6. Pivot flexible selon l'une quelconque des revendications 1 à 5, dans lequel un angle (α) défini entre les membres (4.1, 4.2) de chaque élément de jonction (41, 42) est supérieur à 0° et inférieur à 180°, de préférence dans un intervalle délimité entre 40° et 140°.

7. Pivot flexible selon la revendication 6, dans lequel l'angle (α) entre les éléments (4.1, 4.2) de chaque élément de jonction (41, 42) est d'environ 90°.

8. Pivot flexible selon l'une quelconque des revendications 1 à 7, dans lequel la longueur de toutes les jambes de flexion (3.1, 3.2, 3.3) est la même. 10. Pivot flexible selon l'une quelconque des revendications 1 à 9, dans lequel l'anneau (2) comprenant un plus grand diamètre est le premier anneau (1).

9. Pivot flexible selon l'une quelconque des revendications 1 à 8, comprenant au moins trois jambes flexibles (3.1, 3.2, 3.3).

10. Pivot flexible selon l'une quelconque des revendications 1 à 9, dans lequel l'anneau (1, 2) de plus petit diamètre est un anneau ouvert comprenant deux extrémités en regard (2.01, 2.02), la séparation entre lesdites extrémités (2.01, 2.02) étant une ouverture (2.0) pour permettre d'associer une jambe flexible (3.1, 3.2, 3.3) à l'autre anneau (1, 2).

11. Pivot flexible selon l'une quelconque des revendications 1 à 10, comprenant deux ensembles flexibles, les deux ensembles étant égaux et étant disposés axialement symétriquement, l'un au-dessus de l'autre.

12. Pivot flexible selon l'une quelconque des revendications 1 à 11, comprenant une pluralité de corps (60, 61, 62, 63, 64) fixés les uns aux autres dans la direction axiale du pivot flexible (100), chaque corps (60, 61, 62, 63, 64) comprenant un premier anneau (1'), un deuxième anneau (2') et une branche flexible fixée aux deux anneaux (1, 2) au moyen des organes de liaison en V (41, 42) correspondants, le premier anneau (1') de tous les corps (60, 61, 62, 63, 64) étant concentriques et comprenant le même diamètre et les seconds anneaux (2') de tous les corps (60, 61, 62, 63, 64) étant concentriques et comprenant le même diamètre, les premiers anneaux (1') des différents corps (60, 61, 62, 63, 64) formant le premier anneau (1) du pivot flexible (100) et les seconds anneaux (2') des différents corps (60, 61, 62, 63, 64) étant rotatifs par rapport aux premiers anneaux (1') correspondants et formant le second anneau (2) du pivot flexible (100).

13. Pivot flexible selon la revendication 12, dans lequel chaque anneau (1', 2') avec le plus petit diamètre de chaque corps (60, 61, 62, 63, 64) comprend une ouverture (2.0) pour la jambe flexible correspondante, pour permettre à ladite jambe flexible d'être associée à l'autre anneau (1', 2') dudit corps (60, 61, 62, 63, 64).
